# EUROPÄISCHE PATENTSCHRIFT

(11) **EP 0 677 653 B1**
(45) Veröffentlichungstag und Bekanntmachung des Hinweises auf die Patenterteilung: **23.04.1997**
(21) Anmeldenummer: 95103554.2
(22) Anmeldetag: 13.03.1995
(51) Int. Cl.: F02M 31/125, F02M 53/06, F23D 11/44

(54) **Einrichtung zur Vernebelung von Kraftstoff**
Device for atomizing fuel
Dispositif pour atomiser du carburant

(30) Priorität: 12.04.1994 DE 4412448
(43) Veröffentlichungstag der Anmeldung: 18.10.1995
(73) Patentinhaber: ULEV GmbH, 39171 Dodendorf (DE); TEXAS INSTRUMENTS HOLLAND B.V., 7602 EM Almelo (NL)
(72) Erfinder: Gladigow, Herbert, D-39120 Magdeburg (DE); Schätzing, Wolfgang, Dr., D-39104 Magdeburg (DE)
(74) Vertreter: Leinung, Günter

(56) Entgegenhaltungen:
- EP-A- 0 368 206
- DE-A- 3 017 591
- DE-A- 3 512 659
- FR-A- 2 174 504
- FR-A- 2 280 799
- US-A- 3 933 135

## Beschreibung

Die Erfindung bezieht sich auf eine Einrichtung zur Vernebelung von Kraftstoff in Verbrennungsmotoren, vorzugsweise mit Kraftstoff-Einspritzsystemen.

Aus dem Stand der Technik sind Lösungen bekannt, die unter Nutzung des retrograden Effektes von Kraftstoff zur besseren Nutzung bzw. Ausnutzung beitragen.

In der DE-OS 2800894 wird ein Verfahren beschrieben, das die Eigenschaften von retrograden Substanzen ausnutzt. Um eine retrograde Substanz in den Gaszustand überzuführen, wird, kurz gesagt, die Substanz auf eine bestimmte Temperatur und einen bestimmten Anfangsdruck gebracht und dann auf einen bestimmten Enddruck entspannt, wobei die Temperatur so gewählt ist, daß der Endpunkt der durch die Entspannung bewirkten Zustandsänderung im Gasgebiet liegt.

Das Prinzip der Zerstäubung oder Verdampfung von retrograden Substanzen durch Erhitzen bei hohem Druck in der flüssigen Phase und anschließende adiabatische oder polytropische Entspannung läßt sich vielfach einsetzen.

Der Enddruck kann z.B. dem Kammerdruck in einer brennungskraftmaschine oder dem Atmosphärendruck in einer Brennkammer einer Feuerung entsprechen.

Bei der Nutzung in Verbrennungsmotoren ist es vorteihaft, den Kraftstoff vor der Einspritzung in den Zylinder oder die Vorkammer zu erhitzen.
Die genannte OS beschreibt auch eine Anordnung zur Durchführung des Verfahrens, jedoch weist die dort vorgestellte Anordnung trotz eines gleichfalls vorgeschlagenen integrierten Rückschlagventils den Nachteil der möglichen Dampfblasenbildung (vapour lock) im Einspritzventil auf und ist zudem nicht für eine dynamische bedarfsgerechte Steuerung der Düsenerwärmung entsprechend dem jeweiligen kennfeldabhängigen Motorbetriebszustand vorgesehen, womit die Effizienz zwangsläufig vor allem in Übergangszuständen erheblich beeinträchtigt wird.

Zur Verringerung der Kaltstart- und Warmlaufemissionen und zur Verbesserung der Laufkultur wird üblicherweise eine Kraftstoff-Luftgemisch-Vorwärmung eingesetzt.

So sind bereits eine Vielzahl von Kraftstoff-Gemisch-Heizeinrichtungen (Early Fuel Evaporator) bekannt, die vielfach mit PTC-Heizkeramiken einen oder mehrere im Ansaugrohr des Motors angeordnete metallische Heizkörper erwärmen, die wiederum vom versprühten Kraftstoff oder vom Kraftstoff-Luft-Gemisch umströmt werden und somit während der jeweiligen Wärmeaustauschdauer bei MPI-Systeme konstruktionsbedingt relativ geringe thermische Energie an das strömende Medium abgeben.
DE 3936088, US 4387291 zeigen in unterschiedlicher Ausführung solche Heizeinrichtungen.

Diese bekannten Lösungen weisen die Nachteile auf, daß durch die Erwärmung des gesamten Kraftstoff-Luft-Gemisches eine relative Verringerung der Kraftstofferwärmung und eine negative Beeinflussung des Zylinderfüllungsgrades eintritt.
Weiterhin sind sie mit den Nachteilen des konstruktiven Widerspruches zwischen mit der Heizkörpermasse bzw. Heizkörperoberfläche verbundenen Wärmeaustauschvermögen und thermischer Zeitkonstante sowie den Strömungsverlusten für den Motor behaftet.
Daraus resultiert zwangsläufig das Problem einer unvermeidbaren strömungstechnischen Fehlanpassung der Heizeinrichtung im Ansaugrohr, die einen mehr oder weniger erheblichen Höchstleistungsverlust des Motors nach sich zieht.

Aufgabe der Erfindung ist es, eine Einrichtung zur Vernebelung von Kraftstoff zu entwickeln, mit der eine elektrisch betriebene Kraftstoffvernebelung bei extrem kleiner thermischer Zeitkonstante erreicht wird und die ein Aus- oder Nachrüsten bei herkömmlichen Einspritzventilen gestattet.

Die Erfindung wird durch die im Hauptanspruch herausgestellten Merkmale gelöst.

Besondere Ausgestaltungen der Erfindung sind Gegenstand der Unteransprüche.

Erfindungsgemäß wurde eine Einrichtung zur Vernebelung von Kraftstoff geschaffen, die als kompaktes Bauteil unmittelbar auf den Düsenkopf einer Einspritzdüse druckdicht aufgesetzt werden kann, wobei der Kraftstoff durch eine Einströmöffnung in dieses Bauteil gelangt und die erfindungsgemäße Einrichtung durchströmt, wobei der Kraftstoff, geleitet durch die vorgesehenen Verdampferkontaktbleche, die gleichfalls vorhandenen Heizelemente umströmt und als vernebelter Kraftstoff über einen Kraftstoffnebelauslaß die Einrichtung verläßt.

Im Grundkörper der Einrichtung sind profilierte Verdampferkontaktbleche und PTC-Heizelemente so zueinander angeordnet, daß sie eine Sandwicheinheit bilden und, unter Druck in dem Grundkörper montiert, im Grundkörper eingebaut sind. Dabei gewährleisten die Profilierungen der Verdampferkontaktbleche einerseits die Realisierung vieler Verdampferräume, die vom Kraftstoff durchströmt werden und andererseits infolge ihrer Elastizität einen festen Sitz der Sandwicheinheit im Grundkörper.

Die Vorteile der Erfindung bestehen u. a. darin,
- daß herkömmliche Einspritzventile mit den erfindungsgemäßen Kraftstoffvernebelungseinrichtungen aus- oder nachgerüstet werden können,
- daß als den Verdampfungsraum bildende Elemente Heizelemente, z.B. PTC-Heizkeramik mit hoher Curietemperatur, bimetallische Heizfolien oder Dickfilmheizer auf dünnen Substraten, verwendet werden können, wobei deren Anordnung optimal so erfolgen kann,
- daß bei elektrischer Erregung sich die Raumgeometrie zur bestmöglichen Erfüllung der erfindungsgemäßen Aufgabe selbsttätig einstellt, während nach Abschaltung der elektrischen Heizspannung durch vorzugsweise bimetallische Kraftwirkung die Spaltweite so stark vergrößert wird,
- daß der Strahl der Einspritzdüse unbeeinflußt entsteht und den ursprünglich vorgesehenen Zielbereich im Ansaugkanal des Motors erreicht.

Mit folgendem Ausführungsbeispiel wird die Erfindung näher erläutert.
Die dazugehörige Zeichnung zeigt in
- Figur 1:: eine Schnittdarstellung der erfindungsgemäßen Einrichtung
- Figur 2:: eine Draufsicht nach Figur 1
- Figur 3:: eine Schnittdarstellung der erfindungsgemäßen Einrichtung mit radial angeordneten Einbauteilen

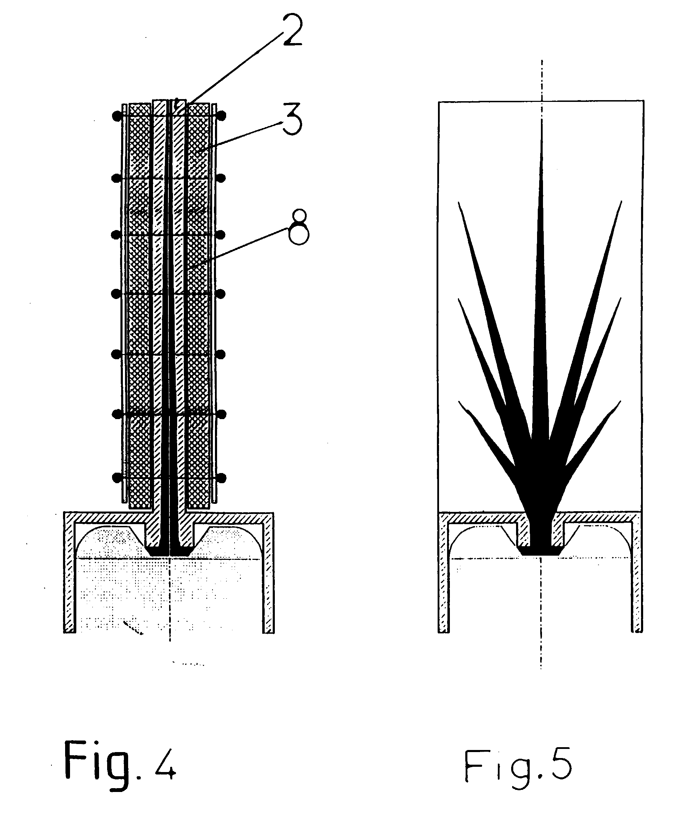

- Figur 4:: eine prinziphafte Darstellung der Vernebelungseinrichtung
- Figur 5:: die prinziphafte Darstellung des sich ausbreitenden Kraftstoffes
- Figur 6:: eine weitere Ausführungsvariante der Vernebelungseinrichtung
- Figur 7:: eine weitere prinziphafte Darstellung des sich ausbreitenden Kraftstoffes

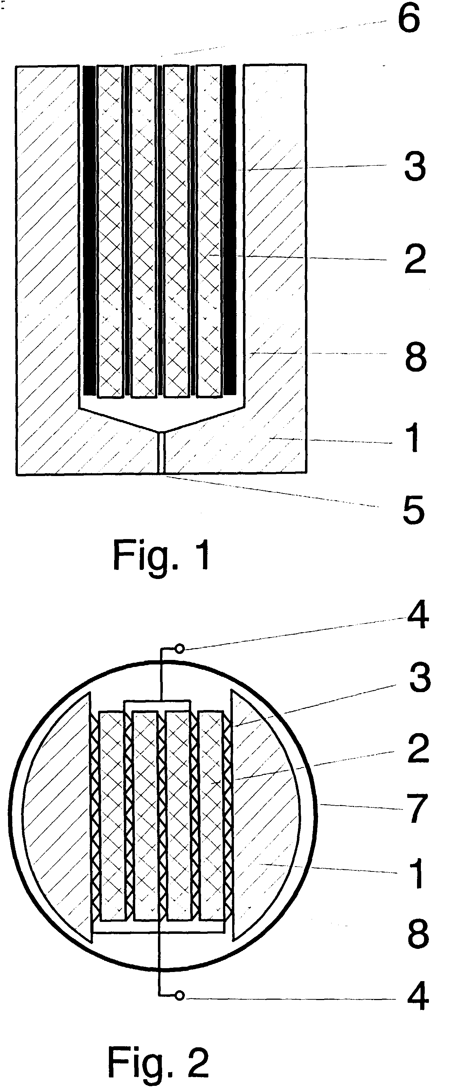

Die Figur 1 zeigt und verdeutlicht den Aufbau und die Ausführung der Einrichtung zum Vernebeln von Kraftstoff, die als eine kompakte Baugruppe ausgeführt und aus einem Grundkörper 1 besteht, in dem Heizelemente 2 und Verdampferkontaktbleche 3 abwechselnd und schichtweise, eine Sandwicheinheit bildend, angeordnet sind.

Die Verdampferkontaktbleche 3 sind profiliert ausgeführt und weisen, wie Figur 2 zeigt, eine Zick-Zack-Form auf, wobei die Verdampferkontaktbleche 3 auch anderweitig, beispielsweise wellenförmig, und/oder waffelförmig, wie auch zick-zack-förmig, profiliert ausgeführt sein können.

Wesentlich ist, daß durch die Profilierung der Verdampferkontaktbleche 3 eine Vielzahl von Verdampferräumen 8 zwischen den Heizelementen 2 und den Verdampferkontaktblechen 3 ausgebildet werden.
Über die vorgesehene Stromzuführung 4 versorgen die Verdampferkontaktbleche 3 die Heizelemente 2.

Ein um den Grundkörper 1 befindlicher Mantel 7 sichert einen äußeren Schutz und verhindert das seitliche Ausströmen von Kraftstoff.

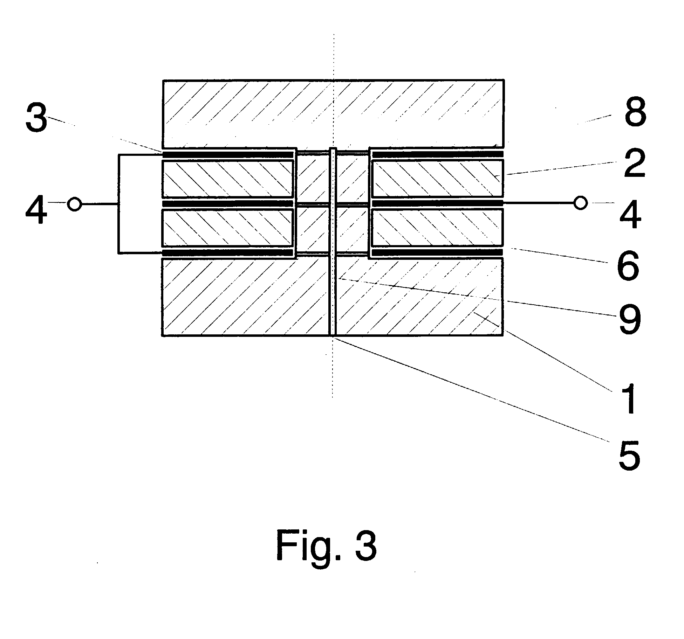

Die in den Figuren 1 und 2 dargestellten Ausführungen der Einrichtung verdeutlichen die Anordnung von Heizelementen 2 und Verdampferkontaktblechen 3 in axialer oder Längsrichtung, während in Figur 3 die radiale Anordnung gezeigt wird.
Sowohl in der Längsanordnung von Heizelementen 2 und dampferkontaktblechen 3 als auch in ihrer radialen Anordnung sind die Verdampferkontaktbleche 3 profiliert ausgeführt und weisen in beiden Varianten noch zusätzliche Durchbrüche auf, um den Umströmeffekt noch zu erhöhen.

Die Heizelemente 2 sind als PTC-Heizkeramik-Elemente mit hoher Curietemperatur, als bimetallische Heizfolie oder als Dickfilmheizer auf dünnen Substanzen ausgeführt.

Die Profilierung der Verdampferkontaktbleche 3 gewährleistet dabei einerseits die Realisierung vieler Verdampferräume 8, die vom Kraftstoff zwischen der Einströmöffnung 5 und dem rechteckigen Kraftstoffnebelauslaß 6 durchströmt werden und andererseits auch, entsprechend ihrer Elastizität, einen festen Sitz der Sandwicheinheit im Grundkörper 1.

Die Verdampferkontaktbleche 3 erfüllen auch die Funktion der elektrischen Kontaktierung der PTC-Heizelemente 2 und die Verbindung mit den Stromzuführungen 4.
Zum funktionellen Ablauf.
Es wird davon ausgegangen, daß die Vernebelungseinrichtung unmittelbar auf einen Düsenkopf einer Einspritzdüse druckdicht aufgesetzt ist.

Der zu vernebelnde Kraftstoff strömt über die Einströmöffnung 5 und überströmt dann, geleitet durch die vorgegebene Profilierung der Verdampferkontaktbleche 3, die PTC-Heizelemente 2 in Längsrichtung.
Währenddessen setzt die Verdampfung mit Druckerhöhung entsprechend den Konditionen zum Erreichen des retrograden Effektes in den engen Verdampfungsräumen 8 ein, so daß vernebelter Kraftstoff nach Entspannung am Kraftstoffauslauf 6 denselben verläßt.

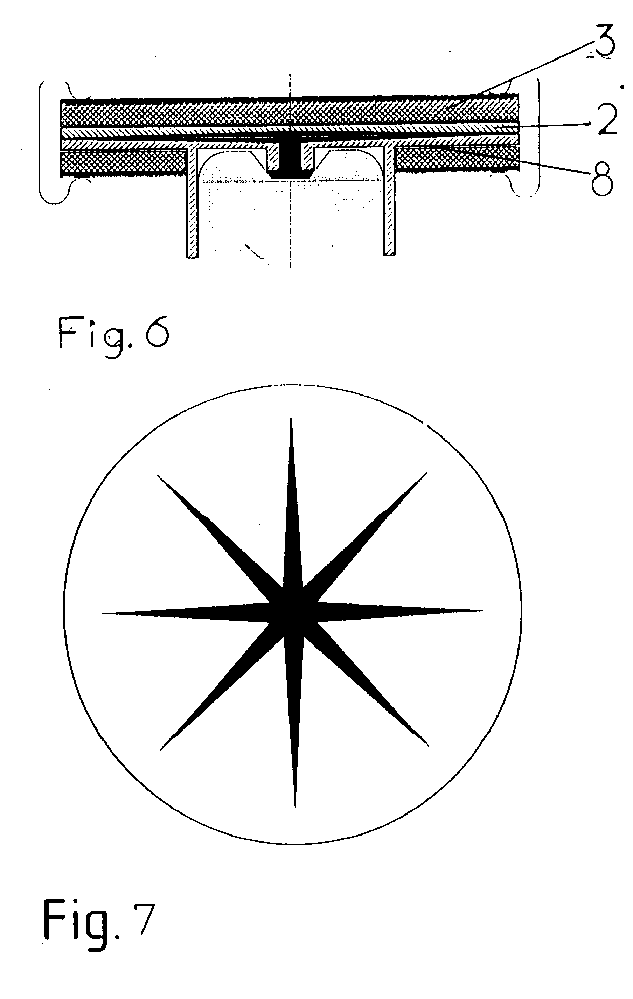

In den Figuren 5 und 7 wird schematisch die Ausbreitung des Kraftstoffes dargestellt.

Bei der in Figur 3 dargestellten radialen Anordnung von Heizelementen 2 und profilierten Verdampferkontaktblechen 3 tritt der Kraftstoff durch die Einströmöffnung 5 und durch einen Kraftstoffkanal 9 in die Vernebelungseinrichtung ein, umströmt in gleicher Weise, wie oben beschrieben, die Verdampferkontaktbleche 3 und die Heizelemente 2, allerdings in radialer Richtung.
Die Verdampfung erfolgt in den engen spaltförmigen Verdampferräumen 8 und der unter Druck stehende Kraftstoff verläßt den zylindermantelförmigen Kraftstoffnebelauslaß 6.

Die Druckverhältnisse innerhalb des Grundkörpers 1 liegen derart vor, daß im Inneren des Grundkörpers 1 beim Durchströmen des zu vernebelnden Kraftstoffes ein Strömungswiderstand aufgebaut wird, der zu einem Druck innerhalb des Grundkörpers 1 führt, der im Bereich des zum Einsetzen des retrograden Effektes beim Verlassen aus dem Grundkörper 1 notwendigen Wertes liegt.

Die erfindungsgemäße Einrichtung ist gezielt massearm ausgeführt, was in Verbindung mit einer dynamisch optimierten Heizcharakteristik zu extrem kurzen Aufheizzeiten führt und somit bereits unmittelbar nach Kaltstart des Motors eine weitgehende/vollständige Zurücknahme der üblicherweise erforderlichen Kraftstoffanreicherung verlangt und damit die Emissionen des kalten Motors bereits dem Niveau des betriebswarmen Motors annähert.

## Patentansprüche

1. Einrichtung zur Vernebelung von Kraftstoff, vorzugsweise für Verbrennungsmotore mit Kraftstoff-Einspritzsystem, unter Nutzung des retrograden Effektes, gekennzeichnet dadurch, daß
in einem Grundkörper (1), zum äußeren Schutz einen Mantel (7) besitzend, sandwichartig Heizelemente (2) und profilierte Verdampfungskontaktbleche (3), zwischen den Heizelementen (2) und den Verdampfungskontaktblechen (3) Verdampfungsräume bildend, angeordnet sind, wobei die Verdampfungskontaktbleche (3) mit einer Stromzuführung (4) ausgerüstet sind und der Grundkörper (1) eine Einströmöffnung (5) und einen Kraftstoffnebelauslaß (6) besitzt.

2. Einrichtung nach Anspruch 1, gekennzeichnet dadurch, daß
die profilierten Verdampfungskontaktbleche (3), einen Raum mit vergrößerter Oberfläche bildend, verschiedenartige Formen, vorzugsweise zick-zack-förmig oder wellenförmig, aufweisen und alternativ mit oder ohne Durchbrüche versehen sind.

3. Einrichtung nach Anspruch 1, gekennzeichnet dadurch, daß
die sandwichartige Anordnung der Heizelemente (2) und Verdampfungskontaktbleche (3) im Grundkörper (1) sowohl länglich als auch radial gestaltet ist.

4. Einrichtung nach Anspruch 3, gekennzeichnet dadurch, daß
die Heizelemente (2) aus PTC-Heizkeramik, bimetallischen Heizfolien oder Dickfilmheizern auf dünnen Substraten bestehen.

## Claims

1. Device for the atomising of fuel, preferably for internal combustion engines with a fuel injection system, by using the retrograde effect, distinguished by the fact that sandwich-like heating elements (2) and shaped evaporation contact plates (3), that form evaporating spaces between the heating elements (2) and the evaporation contact plates (3), are arranged in a structure (1) that has a casing (7) for external protection, whereby the evaporation contact plates (3) are equipped with a power lead (4) and the structure (1) has an admission manifold (5) and a fuel spray outlet (6).

2. Device in accordance with claim 1, distinguished by the fact that the shaped evaporation contact plates (3), that form a space with an increased surface, have different forms, preferably zigzag-shaped or undulating, and are alternately provided with or without openings.

3. Device in accordance with claim 1, distinguished by the fact that the sandwich-like arrangement of the heating elements (2) and evaporation contact plate (3) in the structure (1) is designed both in a longitudinal and a radial manner.

4. Device in accordance with claim 3, distinguished by the fact that the heating elements (2) consist of PTC heating ceramics, bi-metallic heating films or thick film heaters on thin substrates.

## Revendications

1. Installation d'atomisation du carburant, de préférence pour des moteurs à combustion interne comportant un système d'injection du carburant, cette installation utilisant l'effet rétrograde et étant caractérisée par le fait que
dans un corps de base (1), possédant une gaine (7) pour la protection extérieure, sont disposés en sandwich des éléments chauffants (2) et des tôles de contact d'évaporation profilées (3) formant entre les éléments chauffants (2) et les tôles de contact d'évaporation profilées (3) des compartiments d'évaporation, les tôles de contact d'évaporation profilées (3) étant équipées d'une arrivée de courant et le corps de base (1) possédant un orifice d'admission (5) et une sortie pour le brouillard de carburant (6).

2. Installation répondant à la revendication 1, caractérisée par le fait que
les tôles de contact d'évaporation profilées (3), qui forment un compartiment à surface aggrandie, présentent des formes diverses, de préférence une forme en zigzag ou une forme ondulée, et sont exécutées en variante avec ou sans lumières,

3. Installation répondant à la revendication 1, caractérisée par le fait que
la disposition en sandwich des éléments chauffants (2) et des tôles de contact d'évaporation profilées (3) dans le corps de base (1) est conçue aussi bien longitudinalement que radialement.

4. Installation répondant à la revendication 3, caractérisée par le fait que
les éléments chauffants (2) sont exécutés en céramique de chauffage PTC, en pellicules chauffantes à bilames ou en filaments à pellicule épaisse sur substrats minces.
